Europäisches Patentamt

European Patent Office

Office européen des brevets

(19)

(11) **EP 1 542 480 A1**

(12) **EUROPEAN PATENT APPLICATION**
published in accordance with Art. 158(3) EPC

(43) Date of publication:
**15.06.2005 Bulletin 2005/24**

(51) Int Cl.7: **H04Q 7/22**

(21) Application number: **03791283.9**

(86) International application number:
**PCT/JP2003/010743**

(22) Date of filing: **26.08.2003**

(87) International publication number:
**WO 2004/021721 (11.03.2004 Gazette 2004/11)**

(84) Designated Contracting States:
**AT BE BG CH CY CZ DE DK EE ES FI FR GB GR HU IE IT LI LU MC NL PT RO SE SI SK TR**

(30) Priority: **28.08.2002 JP 2002247917**

(71) Applicant: **NEC Corporation**
**Minato-ku, Tokyo 108-8001 (JP)**

(72) Inventor: **HAYATA, Toshihiro**
**Minato-ku, Tokyo 108-8001 (JP)**

(74) Representative: **Glawe. Delfs. Moll**
**Patentanwälte**
**Postfach 26 01 62**
**80058 München (DE)**

(54) **MOBILE COMMUNICATION SYSTEM, INTER-FREQUENCY HO METHOD, MOBILE STATION, BASE STATION, BASE STATION CONTROL DEVICE, AND PROGRAM**

(57)     During inter-frequency HO, an HO destination BTS (2) transmits, in gaps in compressed mode, to an MS (3) in the HO destination frequency, data that are identical to data that are transmitted by the HO origin BTS (1) to the MS (3) in the HO origin frequency. In addition, the MS (3) switches frequencies from the HO origin frequency to the HO destination frequency in the gaps in compressed mode, and the MS (3) thus transmits to the BTS (2) data that are identical to data that are transmitted to the BTS (1) in the HO origin frequency.

FIG. 3

## Description

## Technical Field

The present invention relates to a mobile communication system and to an inter-frequency HO method, a mobile station, a base transceiver station, radio network controller, and a program for the mobile communication system, and more particularly to an inter-frequency HO (Hand Over) method in a CDMA (Code Division Multiple Access) mobile communication system.

## Background Art

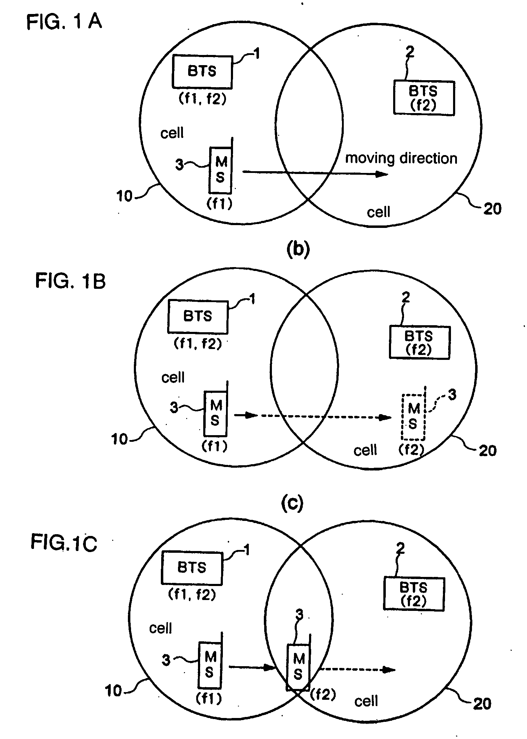

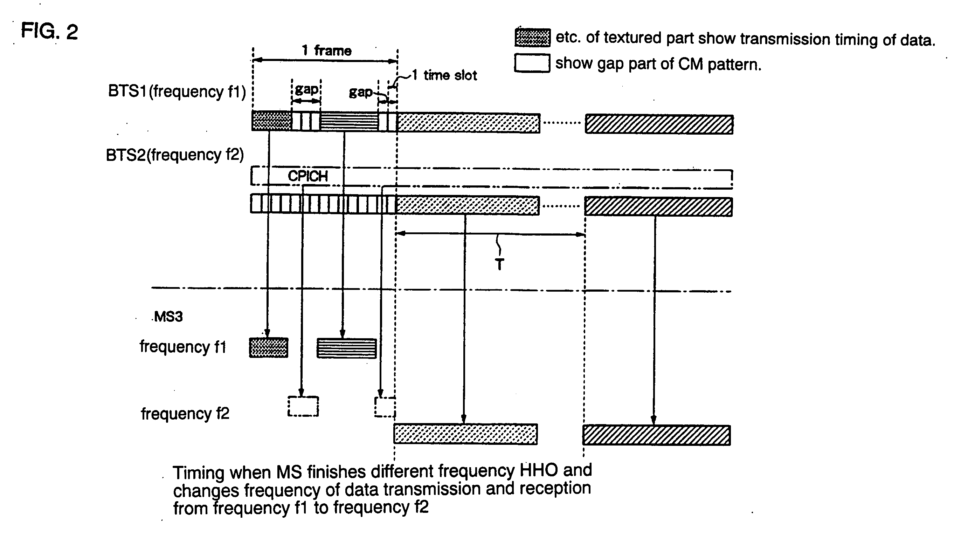

Explanation first regards the procedure for inter-frequency HHO (Hard Hand Over) in a W-CDMA (Wideband-Code Division Multiple Access) mobile communication system. FIGs. 1A-1C are views for explaining inter-frequency HHO, and FIG. 2 is a timing chart for explaining the operations of inter-frequency HHO. The W-CDMA mobile communication system is a third-generation mobile communication system that is discussed in the 3GPP (3rd Generation Partnership Project).

Normally, a base transceiver station (BTS) has a plurality of frequencies and uses one of these frequencies to communicate with a mobile station (MS). However, as shown in FIG. 1A, when MS 3 that is communicating at frequency f1 in cell 10, which is the communication area of BTS 1, moves to cell 20, which is the communication area of BTS 2 that has only frequency f2, MS 3 must change from frequency f1 to frequency f2. This operation is called an "inter-frequency HHO (different frequency HHO)."

Methods of changing from frequency f1 to frequency f2 include: a method of changing from frequency f1 of BTS 1 to frequency f2 of BTS 1 within the communication area of BTS 1 (see FIG. 1B), and a method of changing from frequency f1 of BTS 1 to frequency f2 of BTS 2 in the area in which the communication area of BTS 1 and the communication area of BTS 2 overlap (see FIG. 1C). However, either method may be employed.

Normally, MS 3 has no more than one local oscillator, and MS 3 is therefore not able to receive the downlink signal that is being transmitted from the HHO destination BTS at HHO destination frequency f2 while communicating at the HHO origin frequency f1. However, MS 3 enters a mode for implementing intermittent communication referred to as "compressed mode" at the time of inter-frequency HHO.

As shown in FIG. 2, compressed mode is a mode for enabling the measurement of a cell of a different frequency when performing inter-frequency Hand Over, and is a mode of intermittent communication having gaps, these gaps being time intervals in which communication is not performed.

Thus, compressed mode is a mode of intermittent communication that includes time intervals (gaps) in which BTS 1 does not transmit data to MS 3, but even during normal communication between BTS 1 and MS 3, intermittent communication is performed in which data transmission from BTS 1 to MS 3 is halted in time intervals in which there are no data to be transmitted to MS 3. In normal communication, however, the position and length of intervals in which transmission from BTS 1 to MS 3 is halted depend on the behavior of data that are transmitted from BTS 1 to MS 3, and the positions and lengths of these intervals have no regularity. In compressed mode, however, data transmission from BTS 1 to MS 3 is halted according to set rules in accordance with a predetermined pattern (CM pattern) regardless of the data that are being transmitted. In other words, the length and position of gaps that occur during compressed mode are regular and follow a predetermined pattern.

Details regarding compressed mode are described in 3GPP standards "TS25.212 v3.5.04.4: Compressed Mode" and "TS25.215 v3.5.06.1.1: Compressed Mode" (refer to Japanese Patent Laid-Open Publication No. 2001-224053, p. 4, FIGs. 1-2).

As shown in FIG. 2, HHO destination BTS 2 constantly transmits a common pilot signal of the CPICH (Common Pilot Channel) on all frequencies, this common pilot signal being a reference signal. At the time of inter-frequency HHO, MS 3 switches frequencies from HHO origin frequency f1 to HHO destination frequency f2 in the gaps in compressed mode to receive the common pilot signal from HHO destination BTS 2. By monitoring the common pilot signal from HHO destination BTS, MS 3 confirms that despite shifting to HHO destination frequency f2, the same reception quality will be obtained as before shifting, i.e., that power is being supplied that can obtain this reception quality; and further confirms the reception timing of the downlink signal of HHO destination frequency f2. In FIG. 2, the HHO origin BTS is BTS 1, and the HHO destination BTS is BTS 2, but the HHO origin BTS and the HHO destination BTS may also be the same BTS.

In this way, MS 3 uses the gaps in compressed mode to receive a portion of the common pilot signal that is transmitted from HHO destination BTS 2 by HHO destination frequency f2. Accordingly, regarding a downlink, MS 3 can immediately receive a signal of suitable reception quality from BTS 2 after completion of inter-frequency HHO.

Regarding an uplink, however, HHO destination BTS 2 lacks any arrangement for monitoring the signal of HHO destination frequency f2 from MS 3 at the time of inter-frequency HHO, and as a result, the initial uplink transmission power after completing inter-frequency HHO does not guarantee suitable reception quality, and further, BTS 2 will not have acquired the reception timing of the uplink signal from MS 3.

Accordingly, BTS 2 is unable to receive an uplink signal from MS 3 during the interval from the completion of inter-frequency HHO until BTS 2 detects the reception timing of the uplink signal that is transmitted from MS 3 (interval T shown in FIG. 2). In addition, the uplink signal from MS 3 is not received by BTS 2 in interval T, and as a result, the transmission power control of the uplink between BTS 2 and MS 3 will not be carried out normally and there is consequently a potential for deterioration of reception characteristics and increase in interference.

In addition, when MS 3 performs inter-frequency HHO in the area in which the communication area of HHO origin BTS 1 and the communication area of HHO destination BTS 2 overlap as shown in FIG. 1C, MS 3 is at a great distance from both of BTS 1 and BTS 2 and the downlink reception sensitivity from the standpoint of MS 3 therefore becomes poor. To compensate for this deterioration in sensitivity, each BTS must increase the downlink transmission power to MS 3, but this increase in the downlink transmission power increases downlink interference for other MS.

When shifting from the HO origin BTS to the HO destination BTS without changing frequencies, such as in Hand Over between BTS of the same frequency (DHO: Diversity HO) or Hand Over between sectors (Softer HO), the MS, by simultaneously receiving the same data from these BTS, can both obtain the diversity gain and perform Hand Over without hits.

In inter-frequency HHO, however, MS 3 cannot simultaneously receive the downlink signal from HO origin BTS 1 and the downlink signal from HO destination BTS 2, and as a result, cannot obtain the diversity gain, and further, will encounter difficulties in carrying out Hand Over without hits.

**Disclosure of the Invention**

It is an object of the present invention to provide a mobile communication system that can smoothly and stably perform inter-frequency HO, and further, to provide an inter-frequency HO method, a mobile station, a base transceiver station, a radio network controller, and a program for such a mobile communication system.

The mobile communication system according to the present invention is a mobile communication system that includes a mobile station and a mobile communication network to which this mobile station can connect by radio-waves, and that includes compressed mode, which is a mode of intermittent communication having gaps in which communication is not carried out in mobile communication between the mobile station and the mobile communication network; the mobile communication network including transmission means for, at the time of inter-frequency HO (Hand Over), using the gaps to transmit to the mobile station by the HO destination frequency, data that are identical to data that are transmitted from the mobile communication network to the mobile station by the HO origin frequency.

In the mobile communication system, moreover, the mobile station includes transmission means for, at the time of inter-frequency HO, using the gaps to transmit, by the HO destination frequency to the mobile communication network, data that are identical to data that are transmitted from the mobile station to the mobile communication network by the HO origin frequency.

The inter-frequency HO method according to the present invention is an inter-frequency HO (Hand Over) method of a mobile communication system that includes a mobile station and a mobile communication network to which this mobile station can connect by radio-waves and that includes a compressed mode, which is a mode of intermittent communication having gaps in which communication is not carried out in mobile communication between the mobile station and the mobile communication network; the inter-frequency HO method including a step in which the mobile communication network, at the time of inter-frequency HO, uses the gaps to transmit to the mobile station by the HO destination frequency, data that are identical to data that are transmitted from the mobile communication network to the mobile station by the HO origin frequency.

In addition, the inter-frequency HO method includes a step in which the mobile station, at the time of an inter-frequency HO, uses the gaps to transmit, to the mobile communication network by the HO destination frequency, data that are identical to data that are transmitted by the HO origin frequency from the mobile station to the mobile communication network.

A mobile station according to the present invention is a mobile station that includes a compressed mode, which is a mode of intermittent communication having gaps in which communication is not carried out in mobile communication between the mobile station and mobile communication network, the mobile station including a transmission means for, at the time of an inter-frequency HO (Hand Over), using the gaps to transmit, to the mobile communication network by the HO destination frequency, data that are identical to data that are transmitted by the HO origin frequency from the mobile station to the mobile communication network.

A program according to the present invention is a program for causing a computer to execute the operations of a mobile station having a compressed mode, which is a mode of intermittent communication having gaps in which communication is not carried out in mobile communication between a mobile station and a mobile communication network, the program including a transmission step for, at the time of a inter-frequency HO (Hand Over), using the gaps to transmit, to the mobile communication network by the HO destination frequency, data that are identical to data that are transmitted from the mobile station to the mobile communication network by the HO origin frequency.

A base transceiver station according to the present invention is a base transceiver station that includes a compressed mode, which is a mode of intermittent communication having gaps in which communication is not carried out in mobile communication between a mobile station and a base transceiver station; the base transceiver station including a transmission means for, at the time of an inter-frequency HO (Hand Over), using the gaps to transmit, to the mobile station by the HO destination frequency, data that are identical to data that are transmitted by the HO origin frequency from the HO origin base transceiver station to the mobile station.

A program according to the present invention is a program for causing a computer to execute operations of a base transceiver station that includes a compressed mode, which is a mode of intermittent communication having gaps in which communication is not carried out in mobile communication between a mobile station and a base transceiver station; the program including a transmission step for, at the time of an inter-frequency HO (Hand Over), using the gaps to transmit, to the mobile station by the HO destination frequency, data that are identical to data that are transmitted from the HO origin base transceiver station to the mobile station by the HO origin frequency.

A radio network controller according to the present invention is a radio network controller in a mobile communication system that includes a compressed mode, which is a mode of intermittent communication having gaps in which communication is not carried out in mobile communication between a mobile station and a mobile communication network; the radio network controller including a selective combining means for, at the time of an inter-frequency HO (Hand Over), receiving mutually identical data that are transmitted by using gaps from the mobile station by the HO origin frequency by way of the HO origin base transceiver station and by the HO destination frequency by way of the HO destination base transceiver station and then selectively combining the data.

A program according to the present invention is a program for causing a computer to execute the operations of a radio network controller in a mobile communication system that includes a compressed mode, which is a mode of intermittent communication having gaps in which communication is not carried out in mobile communication between a mobile station and a mobile communication network; the program including a selective combining step for, at the time of an inter-frequency HO (Hand Over), receiving mutually identical data that are transmitted by using gaps from the mobile station by the HO origin frequency by way of HO origin base transceiver station and by the HO destination frequency by way of the HO destination base transceiver station and selectively combining the data.

Thus, in the present invention, the gaps in compressed mode are used during inter-frequency HO to alternately perform both communication between a mobile station and the HO origin base transceiver station that uses the HO origin frequency and communication between the mobile station and the HO destination base transceiver station that uses the HO destination frequency, the data that are transmitted and received using the HO origin frequency and the HO destination frequency being identical.

The effect obtained by the present invention is the ability to perform inter-frequency HO (Hand Over) smoothly and stably. This effect can be obtained because the HO destination base transceiver station transmits in gaps to the mobile station by the HO destination frequency data that are identical to data that the HO origin base transceiver station transmits to the mobile station by the HO origin frequency; and in addition, the mobile station switches frequencies from the HO origin frequency to the HO destination frequency in gaps, whereby the mobile station transmits in gaps to the HO destination base transceiver station data that are identical to data that are transmitted to the HO origin base transceiver station by the HO origin frequency.

**Brief Description of the Drawings**

FIGs. 1A to 1C are views for explaining inter-frequency HHO.
FIG. 2 is a timing chart for explaining the operations for inter-frequency HHO.
FIG. 3 shows the configuration of the mobile communication system according to an embodiment of the present invention.
FIG. 4 shows the configuration of the BTS shown in FIG. 3.
FIG. 5 shows the configuration of the MS shown in FIG. 3.
FIG. 6 shows the configuration of the RNC shown in FIG. 3.
FIG. 7 is a timing chart showing the operations of the mobile communication system according to an embodiment of the present invention.
FIG. 8 is a timing chart showing the operations of the mobile communication system according to an embodiment of the present invention.
FIG. 9 is a timing chart showing the operations of the mobile communication system according to an embodiment of the present invention.
FIG. 10 shows an example of the characteristics of function f [x].
FIG. 11 is a flow chart showing the operations of the mobile communication system according to an embodiment of the present invention.
FIG. 12 is a flow chart showing the operations of the mobile communication system according to an embodiment of the present invention.
FIG. 13 is a flow chart showing the operations of the mobile communication system according to an embodiment of the present invention.
FIG. 14 is a flow chart showing the operations of the mobile communication system according to an embodiment of the present invention.

FIG. 15 is a flow chart showing the operations of the mobile communication system according to an embodiment of the present invention.

FIG. 16 shows an example of the changes of the target SIR (SIR (hho-bts 1) and SIR (hho-bts 2)) according to the flow charts shown in FIGS. 13-15.

**Best Mode for Carrying Out the Invention**

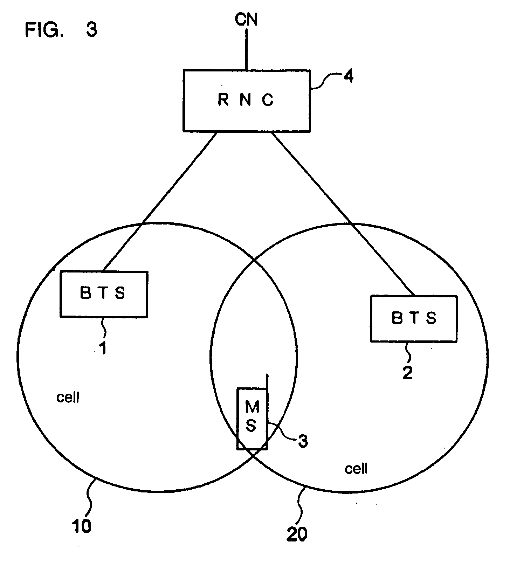

Explanation next regards embodiments of the present invention with reference to the accompanying figures. FIG. 3 shows the configuration of a W-CDMA (Wideband-Code Division Multiple Access) mobile communication system according to an embodiment of the present invention. As shown in FIG. 3, the mobile communication system according to an embodiment of the present invention is made up from: base transceiver stations (BTS) 1 and 2, mobile station (MS) 3, and Radio Network Controller (RNC) 4; RNC 4 being connected to the Core Network (CN).

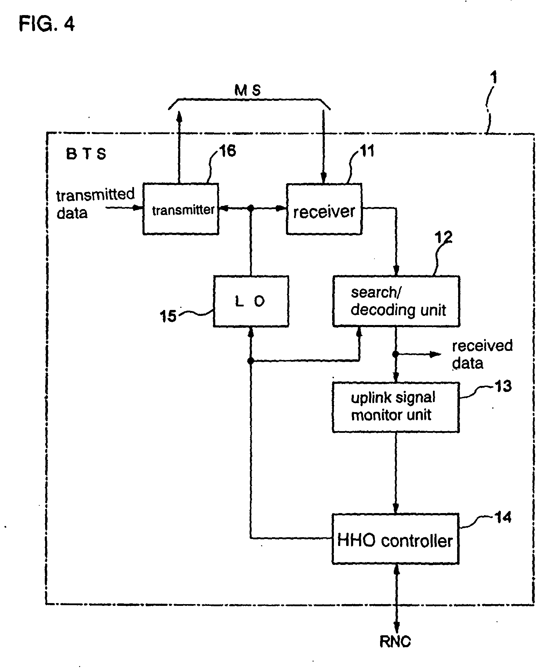

FIG. 4 shows the configuration of BTS 1 shown in FIG. 3. As shown in FIG. 4, BTS 1 is made up from: receiver 11, search/decoding unit 12, uplink signal monitor unit 13, HHO controller 14, local oscillator (LO) 15, and transmitter 16. The configuration of BTS 2 is identical to the configuration of BTS 1 that is shown in FIG. 4.

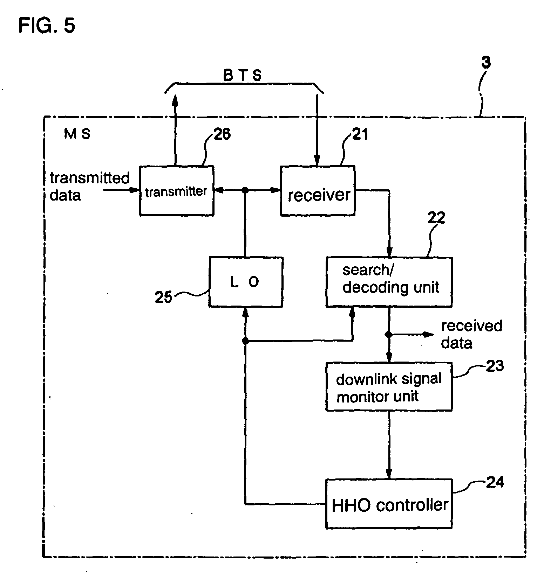

FIG. 5 shows the configuration of MS 3 that is shown in FIG. 3. As shown in FIG. 5, MS 3 is made up from: receiver 21, search/decoding unit 22, downlink signal monitor unit 23, HHO controller 24, LO 25, and transmitter 26.

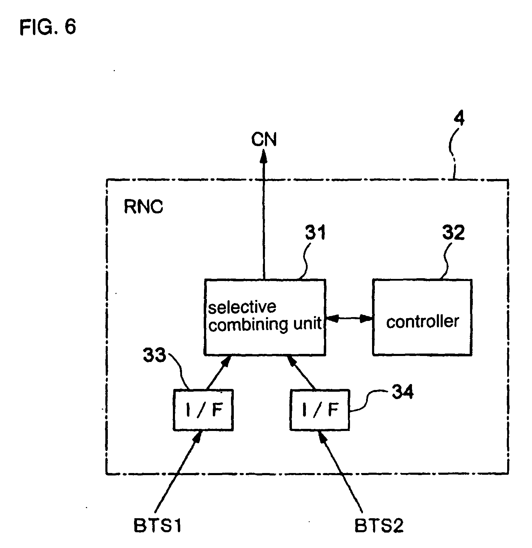

FIG. 6 shows the configuration of RNC 4 that is shown in FIG. 3. As shown in FIG. 6, RNC 4 is made up from: selective combining unit 31, controller 32, and I/F (interface) 33 and 34.

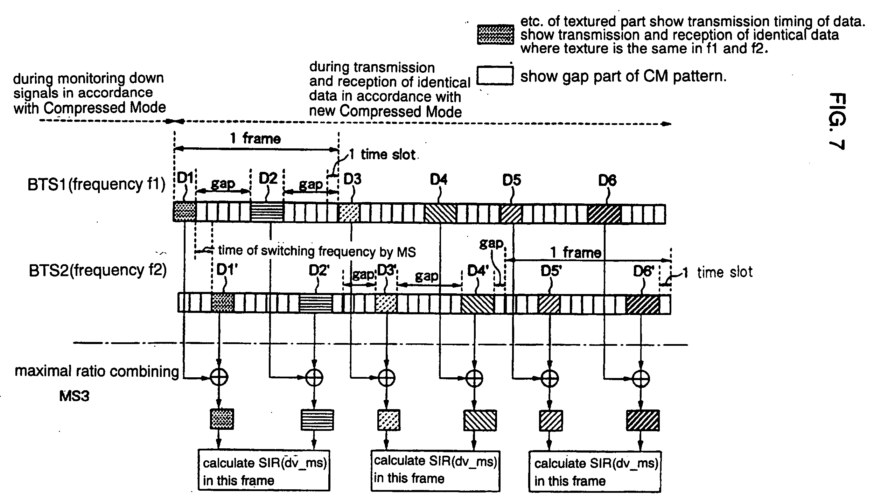

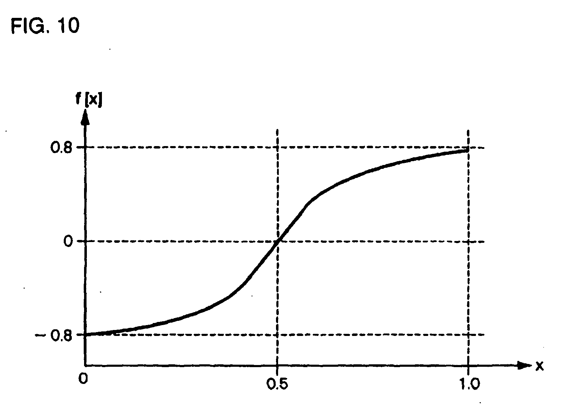

FIGs. 7-9 are timing charts showing the operations of the mobile communication system according to the embodiment of the present invention, and FIGs. 10-14 are flow charts showing the operations of the mobile communication system according to the embodiment of the present invention. Explanation next regards the mobile communication system according to the embodiment of the present invention with reference to these FIGs. 3-14.

In FIG. 3, at the time of inter-frequency HHO (Hard Hand Over), MS 3 switches the frequency from HHO origin frequency f1 to HHO destination frequency f2 in gaps in the compressed mode, and monitors the common pilot signal that is transmitted from HHO destination BTS 2. This monitoring of the downlink signal from HHO destination BTS 2 has already been explained using FIG. 2, and further explanation is therefore here omitted.

In the present embodiment, when monitoring of the common pilot signal from HHO destination BTS 2 is completed, MS 3 uses HHO origin frequency f1 to report this completion to RNC 4 by way of HHO origin BTS 1. In response to this notification, RNC 4 reports the new compressed mode pattern to BTS 1, BTS 2, and MS 3. MS 3 receives this new pattern from RNC 4 by way of HHO origin BTS 1.

MS 3 and HHO destination BTS 2 then use HHO destination frequency f2 to perform communication between MS 3 and HHO destination BTS 2 in the gap intervals of the reported pattern.

Communication between MS 3 and HHO origin BTS 1 that employs HHO origin frequency f1 and communication between MS 3 and HHO destination BTS 2 that employs HHO destination frequency f2 are carried out alternately using these gaps, and the data that are transmitted and received using these frequencies f1 and f2 are the same.

In other words, in the gaps of the reported pattern, HHO destination BTS 2 transmits, to MS 3 by HHO destination frequency f2, data that are identical to data that are transmitted to MS 3 from HHO origin BTS 1 by HHO origin frequency f1. In addition, in the gaps of the reported pattern, MS 3 switches frequencies from HHO origin frequency f1 to HHO destination frequency f2, and MS 3 transmits to HHO destination BTS 2 data that are identical to data that are transmitted to HHO origin BTS 1 from MS 3 by HHO origin frequency f1.

When transmitting data to HHO destination BTS 2 in gaps in the reported pattern, MS 3 further, in addition to the transmission of these data, uses frequency f2 to transmit the pilot signal to HHO destination BTS 2. The data are transmitted using the DPDCH (Dedicated Physical Data Channel) of a DPCH (Dedicated Physical Channel), and the pilot signal is transmitted using the DPCCH (Dedicated Physical Control Channel) of the DPCH.

HHO destination BTS 2 is thus able to use the gaps to monitor the pilot signal from MS 3 by means of uplink signal monitor unit 13. Similar to the monitoring of the downlink signal by MS 3, monitoring of the pilot signal from MS 3 allows HHO destination BTS 2 to both confirm whether the transmission power of the uplink signal of HHO destination frequency f2 from MS 3 is suitable or not, and allows HHO destination BTS 2 to check the reception timing of the HHO destination frequency f2 uplink signal from MS 3.

In the foregoing explanation, the HHO origin BTS is BTS 1 and the HHO destination BTS is BTS 2, but the HHO origin BTS and HHO destination BTS may also be the same BTS.

FIGs. 7-9 show the state of the transmission and reception between MS 3 and the HHO destination BTS of data that are identical to data that are transmitted and received between MS 3 and the HHO origin BTS, this transmission and reception being realized by MS 3 switching the frequency to HHO destination frequency f2 at the positions of the gaps in the new compressed mode. As shown in FIGs. 7-9, in the new compressed mode following completion of monitoring of the pilot signal from the HHO destination BTS, approximately one half of each frame is secured as a gap interval.

FIG. 7 shows the downlink reception operations. As shown in FIG. 7, by switching between HHO origin frequency f1 and HHO destination frequency f2 in accordance with the reported new compressed mode pattern, MS 3 receives data D1-D6 that are transmitted from HHO origin BTS 1 to MS 3 by HHO origin frequency f1 in accordance with the reported new compressed mode pattern (CM pattern) and data D1'-D6' that are transmitted from HHO destination BTS 2 to MS 3 by HHO destination frequency f2 in accordance with the reported new compressed mode pattern. MS 3 then combines (for example, by maximal ratio combining) the mutually identical data that have been received.

Data D1 are identical to data D1', data D2 are identical to data D2', data D3 are identical to data D3', data D4 are identical to data D4', data D5 are identical to data D5', and data D6 are identical to data D6'.

In FIG. 7, the HHO origin BTS is BTS 1 and the HHO destination BTS is BTS 2, but the HHO origin BTS and the HHO destination BTS may also be the same BTS.

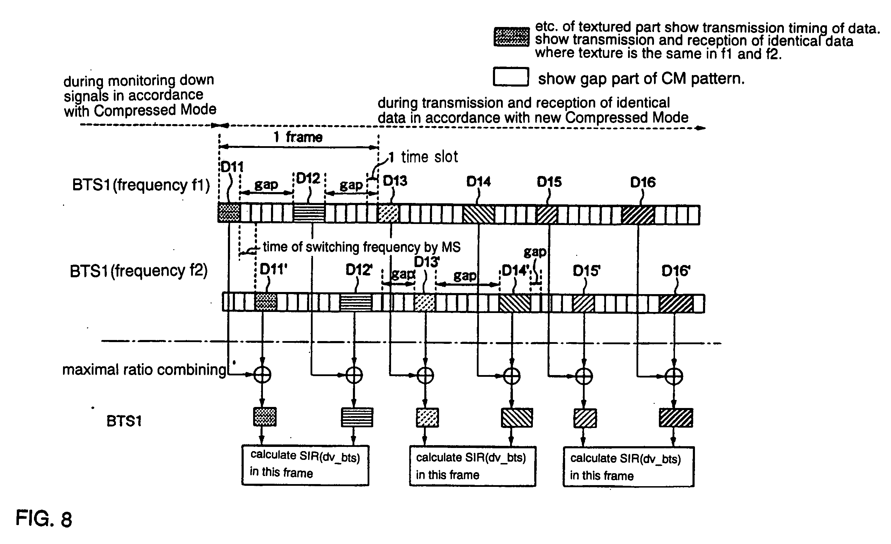

FIG. 8 shows the uplink reception operations of BTS 1 when BTS 1 is both the HHO origin BTS and the HHO destination BTS as well. As shown in FIG. 8, BTS 1 receives data D11-D16 that are transmitted from MS 3 by HHO origin frequency f1 in accordance with the reported new compressed mode pattern and data D11'-D16' that are transmitted from MS 3 by HHO destination frequency f2 in accordance with the reported new compressed mode pattern. BTS 1 then combines the received data that are mutually identical (for example, by maximal ratio combining).

Data D11 are identical to data D11', data D12 are identical to data D12', data D13 are identical to data D13', data D14 are identical to data D14', data D15 are identical to data D15', and data D16 are identical to data D16'.

In FIGs. 7 and 8, when MS 3 receives data D1 from BTS 1, the frequency of MS 3 is frequency f1, and at this time, MS 3 transmits data D11 to BTS 1. Data D1 are not identical to data D11. In addition, when MS 3 receives data D1' from the HHO destination BTS, the frequency of MS 3 is frequency f2, and at this time, MS 3 transmits data D11' to the HHO destination BTS. In addition, data D1' are not identical to data D11'.

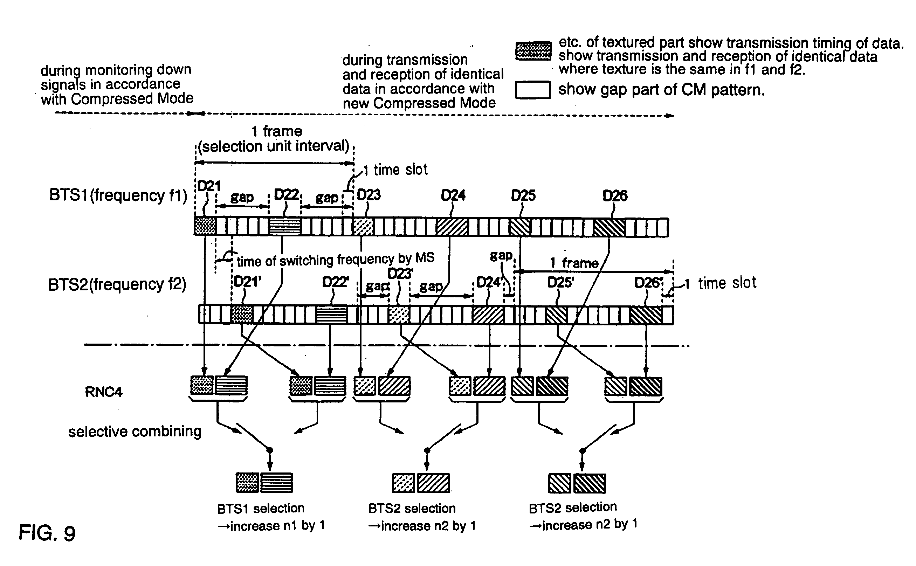

FIG. 9 shows the uplink reception operations of each BTS when the HHO origin BTS is BTS 1 and the HHO destination BTS is BTS 2. As shown in FIG. 9, BTS 1 receives data D21-D26 that are transmitted by HHO origin frequency f1 from MS 3 in accordance with the reported new compressed mode pattern, and BTS 2 receives data D21'-D26' that are transmitted from MS 3 by HHO destination frequency f2 in accordance with the reported new compressed mode pattern. BTS 1 and BTS 2 then transmit the received data to RNC 4. RNC 4 selectively combines the received data from BTS 1 and the received data from BTS 2.

Data D21 are identical to data D21', data D22 are identical to data D22', data D23 are identical to data D23', data D24 are identical to data D24', data D25 are identical to data D25', and data D26 are identical to data D26'.

In FIGs. 7 and 9, when MS 3 receives data D1 from BTS 1, the frequency of MS 3 is frequency f1, and at this time, MS 3 transmits data D21 to BTS 1. Data D1 are not identical to data D21. In addition, when MS 3 receives data D1' from BTS 2, the frequency of MS 3 is frequency f2, and at this time, MS 3 transmits data D21' to BTS 2. Data D1' are not identical to data D21'. Thus, in the present embodiment, at the time of an inter-frequency HHO, MS 3 uses gaps to transmit to the HHO destination BTS data that are identical to data that are transmitted from MS 3 to the HHO origin BTS, and the HHO destination BTS uses gaps to transmit to MS 3 data that are identical to data that are transmitted from the HHO origin BTS to MS 3. Accordingly, inter-frequency HHO can be realized with no hits, as in HO between same-frequency BTS (DHO: Diversity HO) or inter-sector HO (Softer HO).

In the present embodiment, moreover, the target SIR (Signal-to-Interference Ratio) that is used in transmission power control (TPC) of the downlink between MS 3 and the HHO origin BTS and the downlink between MS 3 and the HHO destination BTS and the target SIR that is used in TPC of the uplink between MS 3 and the HHO origin BTS and the uplink between MS 3 and the HHO destination BTS are variably controlled based on the procedures described below.

[1] The following variables are defined for the variable control of the target SIR that is used in the TPC of the downlink between MS 3 and HHO origin BTS 1 and the downlink between MS 3 and HHO destination BTS 2 (all values are true values and not dB):

- SIR (ms): The target SIR of MS 3 that is designated from RNC 4.
- SIR (dv_ms): The reception SIR that is calculated based on a one-frame portion of combined data in MS 3.
- Gain (ms): The diversity gain of MS 3.
- SIR (hho_ms): The target SIR of MS 3 that takes diversity gain into consideration.

Downlink TPC in inter-frequency HHO is carried out by using SIR (hho_ms), and the method of calculating SIR (hho-ms) is as follows:

(0) As the initial value of SIR (hho_ms), the value of SIR (hho_ms) is set to the same value as SIR (ms).

(1) The value of SIR (hho_ms) is not changed until downlink synchronization is established between MS 3 and BTS 2, i.e., until the determination of CRC (Cyclic Redundancy Check) is possible in MS 3 for data that have been transmitted from BTS 2 using frequency f2.

After downlink synchronization has been established, SIR (hho_ms) is changed according to the procedures beginning with (2).

(2) The TPC of the downlink between MS 3 and BTS 1 and downlink between MS 3 and BTS 2 is carried out according to SIR (hho_ms) for each time slot.

(3) After one-frame portions of data have been received from each of BTS 1 and BTS 2, the identical data of each are combined (for example, by maximal ratio combining), and reception SIR (= SIR (dv_ms)) is calculated based on the one-frame portions of the combined data (refer to FIG. 7).

(4) Gain (ms) = SIR (dv_ms) - SIR (ms)

(5) SIR (hho_ms) = SIR (ms) - Gain (ms) / 2

(6) Subsequently, the procedures of (2)-(5) are repeated for each frame until inter-frequency HHO is completed.

In the foregoing explanation, the HHO origin BTS was BTS 1 and the HHO destination BTS was BTS 2, but the HHO origin BTS and the HHO destination BTS may be the same BTS.

[2] When the target SIR that is used in the TPC of the uplink between MS 3 and the HHO origin BTS and the uplink between MS 3 and the HHO destination BTS is variable controlled, the method of implementing variable control over this target SIR differs for cases in which the HHO origin BTS and the HHO destination BTS are the same and cases in which the HHO origin BTS and the HHO destination BTS are different.

[2-1] The following variables are defined for a case in which BTS 1 is both the HHO origin BTS and the HHO destination BTS (In this case, "Uplink between MS 3 and the HHO origin BTS" is a link for the passage of data that are transmitted from MS 3 to BTS 1 using HO origin frequency f1, and "Uplink between MS 3 and the HHO destination BTS" is the link for the passage of data that are transmitted from MS 3 to BTS 1 using HHO destination frequency f2) (all values are true values and not dB):

- SIR (bts): The target SIR of BTS 1 that is designated from RNC 4.
- SIR (dv_bts): The reception SIR that is calculated based on one-frame portions of combined data in BTS 1.
- Gain (bts): The diversity gain of BTS 1.
- SIR (hho_bts): The target SIR of BTS 1 that takes the diversity gain into consideration.

The uplink TPC in inter-frequency HHO is carried out using SIR (hho_bts), the method of calculating SIR (hho_bts) being as follows:

(0) As the initial value of SIR (hho_bts), the value of SIR (hho_bts) is set to the same value as SIR (bts).

(1) The value of SIR (hho_bts) is not changed until uplink synchronization is established between MS 3 and the HHO destination BTS, i.e., until the determination of CRC is possible in BTS 1 for data that have been transmitted from MS 3 using frequency f2. After uplink synchronization has been established, SIR (hho_bts) is changed according to the procedures beginning with (2).

(2) The TPC of uplink between MS 3 and the HHO origin BTS and uplink between MS 3 and the HHO destination BTS is carried out according to SIR (hho_bts) for each time slot.

(3) After one-frame portions of data have been received from MS 3 using each of frequency f1 and frequency f2, identical data of each are combined (for example, by maximal ratio combining), and the reception SIR (= SIR (dv_bts)) is calculated based on one-frame portions of combined data (refer to FIG. 8).

(4) Gain (bts) = SIR (dv_bts) - SIR (bts)

(5) SIR (hho_bts) = SIR (bts) - Gain (bts) / 2

(6) Subsequently, the procedures of (2)-(5) are repeated for each frame until inter-frequency HHO is completed.

[2-2] A case in which BTS 1 is the HHO origin BTS and BTS 2 is the HHO destination BTS differs from the above-described case of [2-1] and requires the control of RNC 4, which is the host device of BTS 1 and BTS 2. The following variables are defined (all values are true values and not dB):

- SIR (bts): The target SIR of BTS 1 and BTS 2 that is designated from RNC 4.
- $\Delta$ (bts 1): The offset for SIR (bts) of BTS 1.
- $\Delta$ (bts 2): The offset for SIR (bts) of BTS 2.
- N: A constant for calculating n1 and n2, described below.
- N1: The number of times that data from BTS 1 have been selected within the past N selection unit intervals in the selective combining processing of RNC 4 (in the example shown in FIG. 7, one selection unit interval is 1 frame).
- n1 [i]: Indicates whether data from BTS 1 have been selected in the $(N-i)^{th}$ selection unit interval within the past N selection unit intervals. "1" indicates that data were selected, and "0" indicates that data were not selected. $N1 = \Sigma n1$ [i].
- N2: The number of times data from BTS 2 have been selected within the past N selection unit intervals in the selective combining process of RNC 4.
- n2 [i]: Indicates whether data from BTS 2 have been selected in the $(N-i)^{th}$ selection unit interval within the past N selection unit intervals. "1" indicates that data were selected, and "0" indicates that data were not selected. N2 = Σn2 [i].

- f [x]: A function for calculating Δ (bts 1) and Δ (bts 2) from N1 and N2. Basically, a monotone increase with respect to x.
- SIR (hho_bts 1): The target SIR of BTS 1 that takes into consideration the selective combining in RNC 4.
- SIR (hho_bts 2): The target SIR of BTS 2 that takes into consideration the selective combining in RNC 4.
- M1: A constant for expressing the length of an interval that reflects N1 and N2 that have been found in the target SIR (hereinbelow referred to as a "reflective interval"), the length of a reflective interval being M1 selection unit intervals. M1 is counted by cnt1.
- M2: A constant for expressing the length of an interval that does not reflect N1 and N2 that have been found in the target SIR (hereinbelow referred to as a "non-reflective interval"), the length of a non-reflective interval being M2 selection unit intervals. M2 is counted by cnt2.

One selection unit interval is an interval in which RNC 4 performs one selective combination, the data for one selection unit interval from BTS 1 and the data for this interval from BTS 2 being selectively combined by RNC 4. In the example shown in FIG. 9, one selection unit interval is one frame, but a selection unit interval is not limited to this form. For example, one selection unit interval may be two frames if the data are voice data, and one selection unit interval may be four frames if the data are packet data.
Uplink TPC in inter-frequency HHO is carried out using SIR (hho_bts 1) and SIR (hho_bts 2), and the method of calculating SIR (hho_bts 1) and SIR (hho_bts 2) is as follows:

(0) As the initial values of SIR (hho_bts 1) and SIR (hho_bts 2), these values are set to the same value as SIR (bts).
(1) The values of SIR (hho_bts 1) and SIR (hho_bts 2) are not changed until the synchronization of the uplink between MS 3 and BTS 2 has been established, i.e., until CRC can be determined in BTS 2 for data that have been transmitted from MS 3 using frequency f2.
After synchronization of the uplink has been established, SIR (hho_bts 1) and SIR (hho_bts 2) are changed in accordance with the procedures of (2) and succeeding steps.
(2) The TPC of the uplink between MS 3 and BTS 1 is carried out in accordance with SIR (hho_bts 1) of each time slot. In addition, the TPC of the uplink between MS 3 and BTS 2 is carried out in accordance with SIR (hho_bts 2) for each time slot.
(3) RNC 4 performs selective combining for the data of one selection unit interval from each BTS (selects the data having the best reception quality) (See FIG. 9). The values n1 [i] and n2 [i] are used to record whether data from each BTS have been selected by this selective combining.
(4) RNC 4 calculates the number of times N1 (=Σn1 [i]) that data from BTS 1 have been selected and the number of times N2 (=Σn2 [1]) that data from BTS 2 have been selected within the past N selection unit intervals.
(5) RNC 4 finds Δ (bts 1) and Δ (bts 2) from the following formulas and reports to BTS 1 and BTS3.

$$\Delta \text{ (bts 1)} = \text{SIR (bts)} * f [N1 - (N1 + N2) / 2]$$

$$\Delta \text{ (bts 2)} = \text{SIR (bts)} * f [N2 - (N1 + N2) / 2]$$

The function f [x] is assumed to be, for example, a function having a characteristic such as shown in FIG. 10. However, in reflective intervals, RNC 4 reports Δ (bts 1) and Δ (bts 2) that have been found by the above formulas to BTS 1 and BTS 2 without alteration; but reports the values of Δ (bts 1) and Δ (bts 2) as "0" in non-reflective intervals.
(6) SIR (hho-bts 1), which is the target SIR that is used in the TPC for uplink between MS 3 and BTS 1, and SIR (hho-bts 2), which is the target SIR that is used in the TPC for uplink between MS 3 and BTS 2, are calculated by the following formulas:

$$\text{SIR (hho\_bts 1)} = \text{SIR (bts)} + \Delta \text{ (bts 1)}$$

$$\text{SIR (hho\_bts 2)} = \text{SIR (bts)} + \Delta \text{ (bts 2)}$$

(7) The procedures of (2)-(6) are subsequently repeated for each selection unit interval until the inter-frequency HHO is completed.

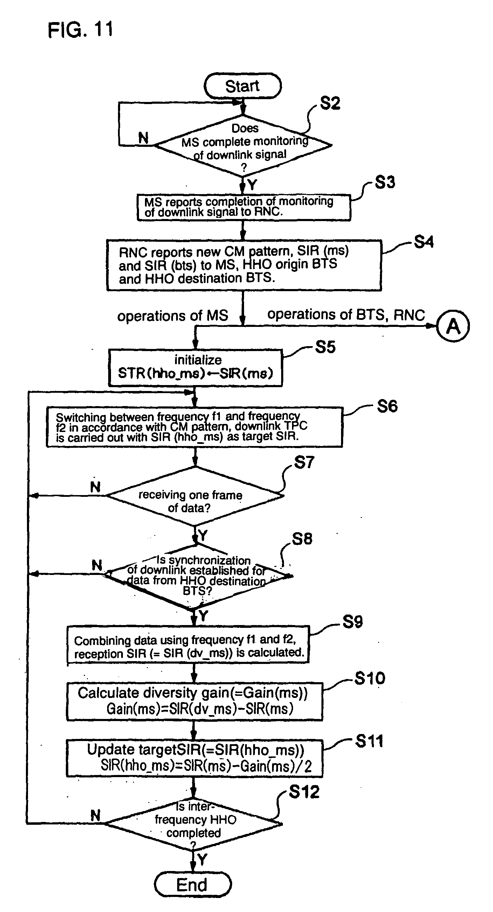

Explanation next regards the details of the overall mobile communication system operations according to an embodiment of the present invention with reference to the flow charts shown in FIGs. 11-15.
As shown in FIG. 11, MS 3 that performs inter-frequency HHO first receives in the gap intervals of compressed mode the common pilot signal, which is the reference signal that HHO destination BTS 2 constantly transmits on all frequencies, and downlink signal monitor unit 23 thereby obtains the reception timing at HHO destination frequency f2. This completes the monitoring of the downlink signal from BTS 2 (Step S2 of FIG. 11).
MS 3 next uses HHO origin frequency f1 to report completion of monitoring of the downlink signal to RNC 4 by way of HHO origin BTS 1 (Step S3 of FIG. 11). In response to this report, RNC 4 reports the new compressed mode pattern to BTS 1, BTS 2, and MS 3; reports SIR (ms) to MS 3 by way of BTS 1; and reports SIR (bts) to BTS 1 and BTS 2 (Step S4 in FIG. 11). In addition, the new compressed mode pattern that is reported from RNC 4 is arranged such that the time in which transmission and reception are carried out using frequency f1 and the time in which transmission and reception are carried out using frequency f2 do not overlap in time, as shown in FIGs. 7-9.

**[1] Operations of MS 3**

MS 3 first initializes SIR (hho_ms) (Step S5 of FIG. 11). MS 3 next transmits and receives data while switching between frequency f1 and frequency f2 in accordance with the new compressed mode pattern that has been reported from RNC 4 as shown in FIG. 7, and downlink TPC between MS 3 and BTS 1 and downlink TPC between MS 3 and BTS 2 are carried out for each time slot with SIR (hho_ms) as the target SIR (Step S6 of FIG. 11).

In other words, MS 3 transmits TPC bits to BTS 1 based on SIR (hho-ms) and the reception SIR of data from BTS 1, and further, transmits TPC bits to BTS 2 based on SIR (hho-ms) and the reception SIR of data from BTS 2. Each of BTS 1 and BTS 2 controls the transmission power of data that are transmitted to MS 3 in accordance with the TPC bits from MS 3.

MS 3, upon receiving one frame of data from each of BTS 1 and BTS 2 ("Yes" in Step S7 of FIG. 11), proceeds to the procedure for changing the value of SIR (hho-ms). When synchronization has not been established for data from BTS 2, however, the value of SIR (hho_ms) is not changed ("No" in Step S8 of FIG. 11).

If synchronization has been established for data from BTS 2 ("Yes" in Step S8 of FIG. 11), MS 3 combines data that are mutually identical that have been received using frequency f1 and frequency f2 in search/decoding unit 22 (for example, by maximal ratio combining), and, based on a one-frame portion of data that have been combined, calculates reception SIR (= SIR (dv_ms)) (Step S9 of FIG. 11).

MS 3 next calculates Gain (ms), which is the difference between SIR (dv_ms) and SIR (ms) (Step S10 of FIG. 11). MS 3 considers Gain (ms) to be diversity gain that is obtained by using frequency f1 and frequency f2 to receive data that are mutually identical, and accordingly updates the value of SIR (hho_ms) (Step S11 of FIG. 11). MS 3 subsequently repeats the operations of Steps S6-S11 until inter-frequency HHO is completed (Step S12 of FIG. 11).

Thus, in the present embodiment, BTS 1 and BTS 2 use gaps to transmit mutually identical data at the time of inter-frequency HHO, and MS 3, while using the gaps to switch between frequency f1 and frequency f2, receives the mutually identical data from BTS 1 and BTS 2. Accordingly, diversity gain can be obtained in MS 3 and interference to other MS can thus be reduced.

In the foregoing explanation, the HHO origin BTS is BTS 1 and the HHO destination BTS is BTS 2, but the HHO origin BTS and HHO destination BTS may be the same BTS.

**[2] Operations of Mobile Communication Network Composed of BTS 1, BTS 2, and RNC 4**

Mobile communication network operations differ for a case in which the HHO origin BTS and the HHO destination BTS are the same and a case in which the HHO origin BTS and the HHO destination BTS are different.

**[2-1] When BTS 1 is both the HHO origin BTS and the HHO destination BTS (different-frequency HHO within a BTS)**

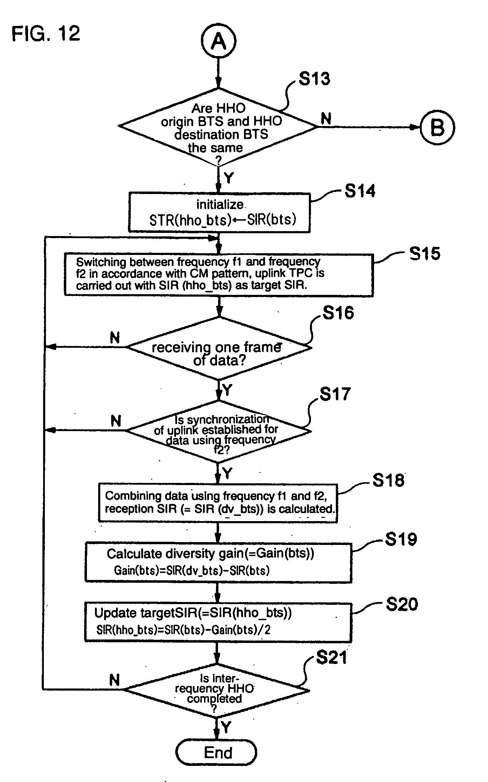

When the HHO origin BTS and the HHO destination BTS are BTS 1 ("Yes" in Step S13 of FIG. 12), BTS 1 initializes SIR (hho_bts) (Step S14 of FIG. 12). As shown in FIG. 8, BTS 1 next uses frequency f1 and frequency f2 in accordance with the new compressed mode pattern that has been reported from RNC 4 to transmit and receive data, and each of uplink TPC between MS 3 and BTS 1 that uses frequency f1 and uplink TPC between MS 3 and BTS 1 that uses frequency f2 is carried out for each time slot using SIR (hho_bts) as the target SIR (Step S15 of FIG. 12).

In other words, BTS 1 transmits to MS 3 TPC bits that are based on SIR (hho_bts) and reception SIR of data that are transmitted from MS 3 using frequency f1, and in addition, transmits to MS 3 TPC bits that are based on SIR (hho_bts) and reception SIR of data that have been transmitted from MS 3 using frequency f2. MS 3 controls the transmission power of data that are transmitted to BTS 1 using frequency f1 and frequency f2 in accordance with the TPC bits from BTS 1.

BTS 1, upon receiving one frame of data that is transmitted from MS 3 using each of frequencies f1 and f2 ("Yes" in Step S16 of FIG. 12), proceeds to the procedure for changing the values of SIR (hho_bts). However, when synchronization has not been established for data that are transmitted from MS 3 using frequency f2, the value of SIR (hho_bts) is not changed ("No" in Step S 17 of FIG. 12).

If synchronization has been established for data that are transmitted from MS 3 using frequency f2 ("Yes" in Step S17 of FIG. 12), BTS 1 combines (for example, by maximal ratio combining) data that are identical that have been received using frequency f1 and frequency f2 in search/decoding unit 12 as shown in FIG. 8 and calculates reception SIR (= SIR (dv_bts)) based on the one-frame portion of data that have been combined (Step S18 of FIG. 12).

BTS 1 next calculates Gain (bts), which is the difference between SIR (dv_bts) and SIR (bts) (Step S19 of FIG. 12). BTS 1 takes Gain (bts) as the diversity gain that is obtained by receiving data that are mutually identical using frequency f1 and frequency f2 and updates the value of SIR (hho_bts) (Step S20 of FIG. 12). BTS 1 subsequently repeats the operations of Steps S15-S20 until the inter-frequency HHO is completed (Step S21 of FIG. 12).

In this way, at the time of inter-frequency HHO, MS 3 transmits identical data by frequency f1 and frequency f2 to BTS 1 using the gaps to switch between frequency f1 and frequency f2, and BTS 1 receives the mutually identical data that have been transmitted from MS 3 using frequency f1 and frequency f2. Diversity gain can thus be obtained in BTS 1, and as result, interference can be reduced.

## [2-2] When the HHO origin BTS and the HHO destination BTS are different (different-frequency HHO between BTS)

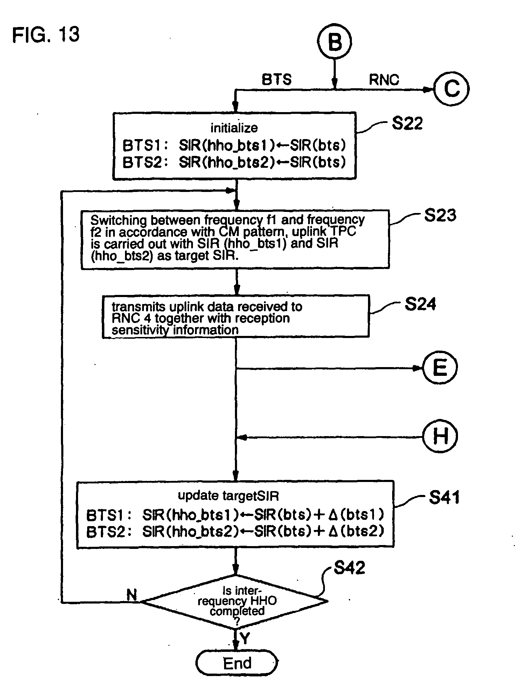

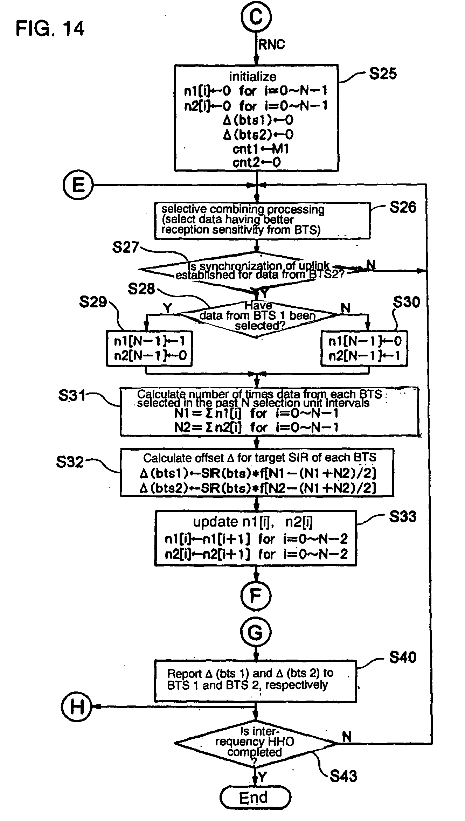

In a case in which the HHO origin BTS is BTS 1 and the HHO destination BTS is BTS 2 ("No" in Step S13 of FIG. 12), each variable is first initialized by BTS 1, BTS 2, and RNC 4 (Step S22 of FIG. 13 and Step S25 of FIG. 14). BTS 1 and BTS 2 next transmit and receive data in accordance with the new compressed mode pattern that has been reported from RNC 4, and uplink TPC between MS 3 and BTS 1 and uplink TPC between MS 3 and BTS 2 are each carried out for each time slot using SIR (hho_bts 1) and SIR (hho_bts 2) as the target SIR (Step S23 of FIG. 13).

In other words, BTS 1 transmits to MS 3 TPC bits based on SIR (hho_bts 1) and reception SIR of data from MS 3, and in addition, BTS 2 transmits to MS 3 TPC bits based on SIR (hho_bts 2) and reception SIR of data from MS 3. MS 3 controls the transmission power of data that are transmitted to BTS 1 and BTS 2 in accordance with the TPC bits from BTS 1 and BTS 2.

Each of BTS 1 and BTS 2 transmits data received from MS 3 to RNC 4 together with reception sensitivity information that corresponds to these data (Step S24 of FIG. 13). As shown in FIG. 9, RNC 4 selects by means of selective combining unit 31 the data having the better reception sensitivity of the data of one selection unit interval from BTS 1 and the data of one selection unit interval from BTS 2 based on the reception sensitivity information that has been reported from BTS 1 and BTS 2 (Step S26 of FIG. 14). The process next transits to the procedure for altering the values of ∆ (bts 1) and ∆ (bts 2). However, if synchronization has not been established in BTS 2 for data from MS 3 ("No" in Step S27 of FIG. 14), each of the values of ∆ (bts 1) and ∆ (bts 2) remain unchanged as the initial values (= 0).

If synchronization is established for data from MS 3 in BTS 2 ("Yes" in Step S27 of FIG. 14), RNC 4 calculates the number of times N1 data from BTS 1 and the number of times N2 data from BTS 2 selected in the past N selection unit intervals (Steps S28-S31 of FIG. 14).

In other words, if data that have been selected by selective combining in Step S26 are data from BTS 1 ("Yes" in Step S28 of FIG. 14), RNC 4 sets the value of n1 [N-1] to "1" and the value of n2 [N-1] to "0" (Step S29 of FIG. 14). On the other hand, if the data that have been selected by selective combining in Step S26 are data from BTS 2 ("No" in Step S28 of FIG. 14), the value of n1 [N-1] is set to "0" and the value of n2 [N-1] is set to "1" (Step S30 of FIG. 14). RNC 4 then calculates N1 and N2 based on n1 [i] and n2 [i] (Step S31 of FIG. 14).

RNC 4 next calculates ∆ (bts 1) and ∆ (bts 2) such that the value of the target SIR of the BTS that supplied data that have been selected more times within the past N selection unit intervals increases and such that the value of the target SIR of the BTS that supplied data that have been selected fewer times decreases (Step S32 of FIG. 14). The function f [x] that is used in this calculation is a monotone increasing function and has characteristics such as those shown in FIG. 10.

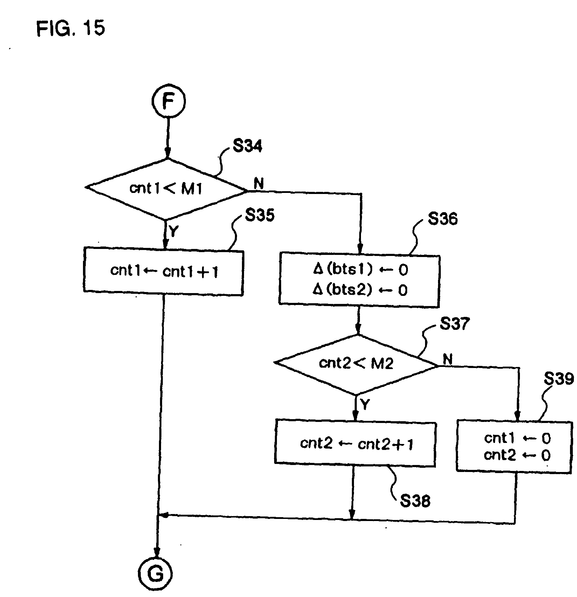

RNC 4 updates n1 [i] and n2 [i] (Step S33 of FIG. 14), following which RNC 4 investigates whether the current interval is a reflective interval or a non-reflective interval (Step S34 of FIG. 15). In other words, the current interval is a non-reflective interval if the value of cnt1 is M1 or greater, and the current interval is a reflective interval if the value of cnt1 is less than M1.

If the interval is a reflective interval ("Yes" in Step S34 of FIG. 15), RNC 4 increases the value of cnt1 by "1" (Step S35 of FIG. 15) and then proceeds to Step S40. On the other hand, if the interval is a non-reflective interval ("No" in Step S34 of FIG. 15), RNC 4 sets the values of each of ∆ (bts 1) and ∆ (bts 2) to "0" (Step S36 of FIG. 15).

RNC 4 then investigates whether the next selection unit interval is a reflective interval or a non-reflective interval (Step S37 of FIG. 15). Specifically, the next selection unit interval is a reflective interval if the value of cnt2 is M2 or greater, and the next selection unit interval is a non-reflective interval if the value of cnt2 is less than M2.

If the next selection unit interval is also a non-reflective interval ("Yes" in Step S37 of FIG. 15), RNC 4 increases the value of cnt2 by "1" (Step S38 of FIG. 15) and then proceeds to Step S40. On the other hand, if the next selection unit interval is a reflective interval ("No" in Step S37 of FIG. 15), RNC 4 sets each of the values of cnt1 and cnt2 to "0" (Step S39 of FIG. 15) and then proceeds to Step S40.

RNC 4 reports ∆ (bts 1) and ∆ (bts 2) to BTS 1 and BTS 2, respectively (Step S40 of FIG. 14). BTS 1 uses ∆ (bts 1) from RNC 4 to update SIR (hho_bts 1), and BTS 2 uses ∆ (bts 2) from RNC 4 to update SIR (hho_bts 2) (Step S41 of FIG. 13). The operations of Steps S23-S41 are then repeated on the mobile communication network side until the inter-frequency HHO has been completed (Step S42 of FIG. 13 and Step S43 of FIG. 14).

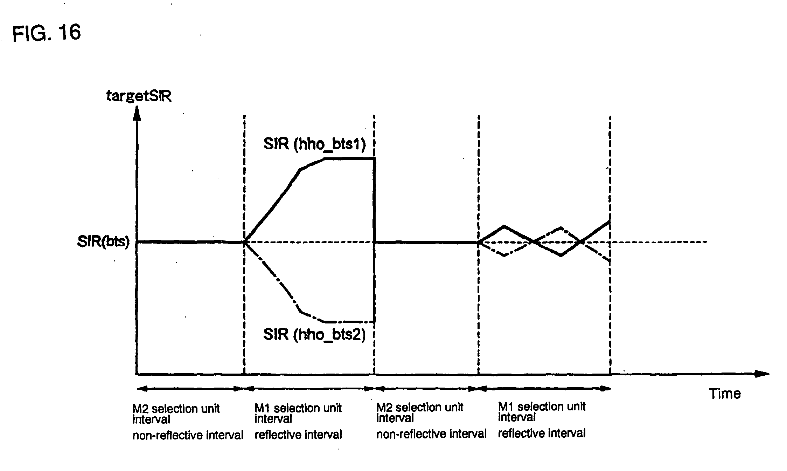

FIG. 16 shows the example of behavior of the target SIR (SIR (hho_bts 1) and SIR ((hho_bts 2)) of BTS 1 and BTS 2 that accords with the above-described Steps S23-S41. As shown in FIG. 16, the values of Δ (bts 1) and Δ (bts 2) are both "0" in non-reflective intervals, and target SIR of BTS 1 and BTS 2 are therefore both SIR (bts). On the other hand, the target SIR each change in accordance with the change in the values of N1 and N2 in reflective intervals.

The variable control of the target SIR of BTS 1 and BTS 2 that is implemented in reflective intervals is realized by first assuming that the reception characteristics of the BTS that supplies data that are more frequently selected are superior to the reception characteristics of the BTS that supplies data that are less frequently selected, and then raising the target SIR of the BTS having better reception characteristics and lowering the target SIR of the BTS having poorer reception characteristics. Accordingly, the difference between the target SIR tends to increase with the passage of time to a greater degree than the original difference in reception characteristics when the difference in reception characteristics between BTS 1 and BTS 2 is a maximum (refer to FIG. 16). However, the periodic provision of a non-reflective interval suppresses increase in the difference between the target SIR that would surpass the difference in the original reception characteristics.

Finally, the processing operations of each of BTS 1, BTS 2, MS 3, and RNC 4 that follow the flow charts that are shown in FIGS. 11-15 can obviously be realized by causing a computer that serves as the CPU (control unit) to read and execute programs that have been stored in advance in a memory medium such as ROM.

**Claims**

1.  A mobile communication system that includes a mobile station and a mobile communication network to which this mobile station can connect by radio-waves, and that includes a compressed mode, which is a mode of intermittent communication having gaps in which communication is not carried out in mobile communication between said mobile station and said mobile communication network; said mobile communication network comprising:

    transmission means for, at a time of inter-frequency HO (Hand Over), using said gaps to transmit to said mobile station by an HO destination frequency, data that are identical to data that are transmitted from said mobile communication network to said mobile station by an HO origin frequency.

2.  A mobile communication system according to claim 1, said mobile station comprising combining means for receiving and combining mutually identical data that are transmitted from said transmission means by the HO origin frequency and the HO destination frequency.

3.  A mobile communication system according to claim 2, said mobile station comprising measurement means for measuring reception quality based on output data of said combining means and, based on this reception quality, implements variable control over a target reception quality that is used to control a transmission power of downlink between said mobile communication network and said mobile station.

4.  A mobile communication system according to claim 1, said mobile station comprising transmission means for, at the time of said inter-frequency HO, using said gaps to transmit, to said mobile communication network by the HO destination frequency, data that are identical to data transmitted from said mobile station to said mobile communication network by the HO origin frequency.

5.  A mobile communication system according to claim 4, wherein each of a plurality of base transceiver stations that make up said mobile communication network includes combining means for, when an HO origin base transceiver station and an HO destination base transceiver station at the time of said inter-frequency HO are the same base transceiver station and this base transceiver station is its own base transceiver station, receiving and combining mutually identical data that are transmitted by the HO origin frequency and the HO destination frequency by said transmission means of said mobile station.

6.  A mobile communication system according to claim 5, wherein each of said plurality of base transceiver stations includes measurement means for measuring reception quality based on output data of its own said combining means, and based on this reception quality, implements variable control over a target reception quality that is used to control a transmission power of uplink between said mobile communication network and said mobile station.

7.  A mobile communication system according to claim 4, wherein a Radio Network Controller that is connected to a plurality of base transceiver stations that make up said mobile communication network includes selective combining means for, when the HO origin base transceiver station and the HO destination base transceiver station at the time of said inter-frequency HO are different base transceiver stations, receiving by way of said HO origin base transceiver station and said HO destination base transceiver station mutually identical data that are transmitted by the HO origin frequency and the HO destination frequency by means of said transmission means of said mobile station and selectively combining said received data.

8. A mobile communication system according to claim 7, wherein uplink transmission power control is effected by increasing the transmission power of the uplink between said mobile station and, of said HO origin base transceiver station and said HO destination base transceiver station, the base transceiver station whose data have been selected more times in the selective combining that has been effected by said selective combining means within a past prescribed interval, and by decreasing the transmission power of the uplink between said mobile station and the base transceiver station whose data have been selected fewer times.

9. A mobile communication system according to claim 4, wherein:

said mobile station includes monitor means for monitoring, in said gaps, a common pilot signal that is a reference signal that is constantly transmitted by the HO destination base transceiver station at the time of said inter-frequency HO; and
said transmission means of each of said mobile communication network and said mobile station begins transmission of identical data after the monitoring of the common pilot signal by said monitor means is completed.

10. A mobile communication system according to claim 3, wherein said reception quality is reception SIR (Signal-to-Interference Ratio), and said target reception quality is target SIR.

11. A mobile communication system according to claim 6, wherein said reception quality is reception SIR (Signal-to-Interference Ratio), and said target reception quality is target SIR.

12. An inter-frequency HO (Hand Over) method of a mobile communication system that includes a mobile station and a mobile communication network to which this mobile station can connect by radiowaves, and that includes a compressed mode, which is a mode of intermittent communication having gaps in which communication is not carried out in mobile communication between said mobile station and said mobile communication network; said inter-frequency HO method comprising:

a transmission step wherein said mobile communication network, at a time of inter-frequency HO, uses said gaps to transmit to said mobile station by an HO destination frequency, data that are identical to data that are transmitted from said mobile communication network to said mobile station by an HO origin frequency.

13. An inter-frequency HO method according to claim 12, said method comprising a combining step wherein said mobile station receives and combines mutually identical data that are transmitted by the HO origin frequency and the HO destination frequency in said transmission step.

14. An inter-frequency HO method according to claim 13, said method comprising a measurement step wherein said mobile station measures reception quality based on combined data obtained by said combining step; wherein, based on this reception quality, variable control is implemented over target reception quality that is used to control the transmission power of downlink between said mobile communication network and said mobile station.

15. An inter-frequency HO method according to claim 12, said method comprising a transmission step wherein said mobile station, at the time of said inter-frequency HO, uses said gaps to transmit, to said mobile communication network by the HO destination frequency, data that are identical to data that are transmitted from said mobile station to said mobile communication network by the HO origin frequency.

16. An inter-frequency HO method according to claim 15, said method comprising a combining step whereby each of a plurality of base transceiver stations that make up said mobile communication network, when an HO origin base transceiver station and an HO destination base transceiver station at the time of said inter-frequency HO are the same base transceiver station and this base transceiver station is its own base transceiver station, receive and combine mutually identical data that are transmitted by the HO origin frequency and the HO destination frequency in said transmission step of said mobile station.

17. An inter-frequency HO method according to claim 16, said method comprising a measurement step wherein each of said plurality of base transceiver stations measures reception quality based on combined data obtained by said combining step of its own station, and wherein, based on this reception quality, variable control is implemented over a target reception quality that is used to control a transmission power of uplink between said mobile communication network and said mobile station.

18. An inter-frequency HO method according to claim 15, said inter-frequency HO method including a selective combining step wherein: when the HO origin base transceiver station and the HO destination base transceiver station at the time of said inter-frequency HO are different base transceiver stations, a Radio Network Controller that is connected to a plurality of base transceiver stations that make up said mobile communication network receives by way of said HO origin base transceiver station and said HO destination base transceiver station mutually identical data that are transmitted by the HO origin frequency and the HO destination frequency in said transmission step of said mobile station and selectively combines said received data.

19. An inter-frequency HO method according to claim 18, wherein uplink transmission power control is effected by increasing the transmission power of uplink between said mobile station and, of said HO origin base transceiver station and said HO destination base transceiver station, the base transceiver station whose data have been selected more times in the selective combining that has been effected within a past prescribed interval in said selective combining step, and by decreasing the transmission power of uplink between said mobile station and the base transceiver station whose data have been selected fewer times.

20. An inter-frequency HO method according to claim 15, said method including a monitoring step wherein said mobile station monitors, in said gaps, a common pilot signal that is a reference signal that is constantly transmitted by an HO destination base transceiver station at the time of said inter-frequency HO; wherein transmission of identical data in each of said transmission steps of said mobile communication network and said mobile station begins after the completion of monitoring of the common pilot signal in said monitor step.

21. An inter-frequency HO method according to claim 14, wherein said reception quality is reception SIR (Signal-to-Interference Ratio), and said target reception quality is target SIR.

22. An inter-frequency HO method according to claim 17, wherein said reception quality is reception SIR (Signal-to-Interference Ratio), and said target reception quality is target SIR.

23. A mobile station that includes a compressed mode, which is a mode of intermittent communication having gaps in which communication is not carried out in mobile communication between the mobile station and a mobile communication network, and includes transmission means for, at a time of an inter-frequency HO (Hand Over), using the gaps to transmit, to the mobile communication network by an HO destination frequency, data that are identical to data that are transmitted by an HO origin frequency from the mobile station to the mobile communication network.

24. A mobile station according to claim 23, said mobile station comprising combining means for receiving and combining mutually identical data that are transmitted by the HO origin frequency and the HO destination frequency from said mobile communication network using said gaps at the time of said inter-frequency HO.

25. A mobile station according to claim 24, said mobile station including measurement means for measuring reception quality based on output data of said combining means, and that, based on this reception quality, implements variable control over a target reception quality that is used to control a transmission power of downlink between said mobile communication network and said mobile station.

26. A mobile station according to claim 25, wherein said reception quality is the reception SIR (Signal-to-Interference Ratio); and said target reception quality is the target SIR.

27. A mobile station according to claim 24, wherein said mobile station includes a monitor means for monitoring, in said gaps, a common pilot signal that is a reference signal that is constantly transmitted by an HO destination base transceiver station at the time of said inter-frequency HO; wherein transmission of identical data by said transmission means and transmission of identical data by said mobile communication network begin after completion of monitoring of the common pilot signal by said monitoring means.

28. A program for causing a computer to execute operations of a mobile station having a compressed mode, which is a mode of intermittent communication having gaps in which communication is not carried out in mobile communication between a mobile station and a mobile communication network; said program comprising:

a transmission step for, at a time of a inter-frequency HO (Hand Over), using said gaps to transmit, to said mobile communication network by an HO destination frequency, data that are identical to data that are transmitted from said mobile station to said mobile communication network by an HO origin frequency.

29. A program according to claim 28, said program comprising a combining step for receiving and combining mutually identical data that are transmitted by the HO origin frequency and the HO destination frequency from said mobile communication network using said gaps at the time of said inter-frequency HO.

30. A program according to claim 29, said program comprising a measurement step for measuring reception quality based on combined data obtained by said combining step, wherein, based on this reception quality, variable control is implemented over a target reception quality that is used to control a transmission power of downlink between said mobile communication network and said mobile station.

31. A program according to claim 30, wherein said reception quality is the reception SIR (Signal-to-Interference Ratio), and said target reception quality is the target SIR.

32. A program according to claim 29, said program including a monitoring step for monitoring in said gaps a common pilot signal that is a reference signal that is constantly transmitted by the HO destination base transceiver station at the time of said inter-frequency HO, wherein the transmission of identical data in said transmission step and the transmission of identical data by said mobile communication network begin after completion of monitoring of the common pilot signal in said monitoring step.

33. A base transceiver station that includes a compressed mode, which is a mode of intermittent communication having gaps in which communication is not carried out in mobile communication between a mobile station and a base transceiver station; said base transceiver station comprising:

    transmission means for, at the time of an inter-frequency HO (Hand Over), using said gaps to transmit, to said mobile station by the HO destination frequency, data that are identical to data that are transmitted from the HO origin base transceiver station to the mobile station by the HO origin frequency.

34. A base transceiver station according to claim 33, said base transceiver station comprising combining means for, when the base transceiver station is both the HO destination base transceiver station and the HO origin base transceiver station at the time of said inter-frequency HO, receiving and combining mutually identical data that are transmitted by the HO origin frequency and the HO destination frequency from said mobile station using said gaps at the time of said inter-frequency HO.

35. A base transceiver station according to claim 34, said base transceiver station comprising measurement means for measuring reception quality based on output data of said combining means and, based on this reception quality, implementing variable control over a target reception quality that is used to control the transmission power of the uplink between its own station and said mobile station.

36. A base transceiver station according to claim 35, wherein said reception quality is the reception SIR (Signal-to-Interference Ratio), and said target reception quality is the target SIR.

37. A base transceiver station according to claim 34, said base transceiver station comprising means for constantly transmitting a common pilot signal, which is a reference signal, wherein said mobile station monitors this common pilot signal in said gaps, and the transmission of identical data by said transmission means and the transmission of identical data by said mobile station begin after the completion of monitoring of the common pilot signal by said mobile station.

38. A program for causing a computer to execute operations of a base transceiver station that includes a compressed mode, which is a mode of intermittent communication having gaps in which communication is not carried out in mobile communication between a mobile station and a base transceiver station, said program comprising:

    a transmission step for, at the time of an inter-frequency HO (Hand Over), using said gaps to transmit, to said mobile station by the HO destination frequency, data that are identical to data that are transmitted from said HO origin base transceiver station to said mobile station by the HO origin frequency.

39. A program according to claim 38, said program comprising a combining step for, when a base transceiver station is both the HO destination base transceiver station and the HO origin base transceiver station at the time of said inter-frequency HO, receiving and combining mutually identical data that are transmitted by the HO origin frequency and the HO destination frequency from said mobile station using said gaps at the time of said inter-frequency HO.

40. A program according to claim 39, said program comprising a measurement step for measuring reception quality based on combined data obtained by said combining step, wherein, based on this reception quality, variable control is implemented over the target reception quality that is used to control the transmission power of the uplink between its own station and said mobile station.

**41.** A program according to claim 40, wherein said reception quality is reception SIR (Signal-to-Interference Ratio), and said target reception quality is the target SIR.

**42.** A program according to claim 39, said program comprising a step for constantly transmitting a common pilot signal that is a reference signal, wherein said mobile station monitors this common pilot signal in said gaps, and the transmission of identical data in said transmission step and the transmission of identical data by said mobile station begin after completion of monitoring of the common pilot signal by said mobile station.

**43.** A radio network controller in a mobile communication system that includes a compressed mode, which is a mode of intermittent communication having gaps in which communication is not carried out in mobile communication between a mobile station and a mobile communication network, said radio network controller comprising:

a selective combining means for, at the time of an inter-frequency HO (Hand Over), receiving mutually identical data that are transmitted from the mobile station by the HO origin frequency by way of the HO origin base transceiver station and by the HO destination frequency by way of the HO destination base transceiver station by using gaps and then selectively combining the data.

**44.** A radio network controller according to claim 43, wherein uplink transmission power control is effected by increasing the transmission power of the uplink between said mobile station 40 and, of said HO origin base transceiver station and said HO destination base transceiver station, the base transceiver station whose data have been selected more times in the selective combining that has been effected by said selective combining means within a past prescribed interval, and decreasing the transmission power of the uplink between said mobile station and the base transceiver station whose data have been selected fewer times.

**45.** A radio network controller according to claim 43, wherein said mobile station monitors, in said gaps, a common pilot signal that is a reference signal that is constantly transmitted by said HO destination base transceiver station, and wherein transmission of identical data by said mobile station begins after completion of monitoring of the common pilot signal by said mobile station.

**46.** A radio network controller according to claim 44, wherein said mobile station monitors, in said gaps, a common pilot signal that is a reference signal that is constantly transmitted by said HO destination base transceiver station, and wherein transmission of identical data by said mobile station begins after completion of monitoring of the common pilot signal by said mobile station.

**47.** A program for causing a computer to execute operations of a radio network controller in a mobile communication system that includes a compressed mode, which is a mode of intermittent communication having gaps in which communication is not carried out in mobile communication between a mobile station and a mobile communication network, said program comprising:

a selective combining step for, at the time of an inter-frequency HO (Hand Over), receiving mutually identical data that are transmitted by using said gaps from said mobile station by the HO origin frequency by way of HO origin base transceiver station and by the HO destination frequency by way of the HO destination base transceiver station and selectively combining the data.

**48.** A program according to claim 47, wherein uplink transmission power control is effected by increasing the transmission power of the uplink between said mobile station and, of said HO origin base transceiver station and said HO destination base transceiver station, the base transceiver station whose data have been selected more times in the selective combining that has been effected by said selective combining means within a past prescribed interval, and decreasing the transmission power of the uplink between said mobile station and the base transceiver station whose data have been selected fewer times.

**49.** A program according to claim 47, wherein said mobile station monitors, in said gaps, a common pilot signal that is a reference signal that is constantly transmitted by said HO destination base transceiver station, and wherein transmission of identical data by said mobile station begins after completion of monitoring of the common pilot signal by said mobile station.

**50.** A program according to claim 48, wherein said mobile station monitors, in said gaps, a common pilot signal that is a reference signal that is constantly transmitted by said HO destination base transceiver station, and wherein transmission of identical data by said mobile station begins after the completion of monitoring of the common pilot signal by said mobile station.

FIG. 1 A

**(b)**

FIG. 1B

**(c)**

FIG.1C

# FIG. 2

etc. of textured part show transmission timing of data.

show gap part of CM pattern.

BTS1(frequency f1)

1 frame

1 time slot

gap  gap

BTS2(frequency f2)

CPICH

T

MS3

frequency f1

frequency f2

Timing when MS finishes different frequency HHO and changes frequency of data transmission and reception from frequency f1 to frequency f2

EP 1 542 480 A1

FIG. 3

FIG. 4

FIG. 5

FIG. 6

**FIG. 7**

etc. of textured part show transmission timing of data.
show transmission and reception of identical data where texture is the same in f1 and f2.

show gap part of CM pattern.

during monitoring down signals in accordance with Compressed Mode

during transmission and reception of identical data in accordance with new Compressed Mode

1 frame

1 time slot

BTS1(frequency f1)

D1 | gap | D2 | gap | D3 | D4 | D5 | D6

time of switching frequency by MS

gap | 1 frame

BTS2(frequency f2)

D1' | D2' | gap | D3' | gap | D4' | D5' | D6' | 1 time slot

maximal ratio combining

MS3

calculate SIR(dv_ms) in this frame

calculate SIR(dv_ms) in this frame

calculate SIR(dv_ms) in this frame

etc. of textured part show transmission timing of data.
show transmission and reception of identical data
where texture is the same in f1 and f2.

show gap part of CM pattern.

during monitoring down
signals in accordance
with Compressed Mode

during transmission and reception of identical
data in accordance with new Compressed Mode

1 frame

1 time slot

BTS1 (frequency f1)

D11    D12    D13    D14    D15    D16
gap    gap

time of switching frequency by MS

BTS1 (frequency f2)

D11'    D12'    D13'    D14'    D15'    D16'
gap    gap    gap

maximal ratio combining

BTS1

| calculate SIR(dv_bts) in this frame | calculate SIR(dv_bts) in this frame | calculate SIR(dv_bts) in this frame |

FIG. 8

EP 1 542 480 A1

FIG. 9

during monitoring down signals in accordance with Compressed Mode

during transmission and reception of identical data in accordance with new Compressed Mode

etc. of textured part show transmission timing of data. show transmission and reception of identical data where texture is the same in f1 and f2.

show gap part of CM pattern.

1 frame (selection unit interval)

1 time slot

BTS1(frequency f1)

D21 gap D22 gap D23 D24 D25 D26

time of switching frequency by MS

gap 1 frame 1 time slot

BTS2(frequency f2)

D21' D22' D23' gap gap D24' D25' D26'

RNC4

selective combining

BTS1 selection →increase n1 by 1

BTS2 selection →increase n2 by 1

BTS2 selection →increase n2 by 1

EP 1 542 480 A1

FIG. 10

EP 1 542 480 A1

FIG. 11

Start

**S2** — Does MS complete monitoring of downlink signal ? — N (loop back)

Y

**S3** — MS reports completion of monitoring of downlink signal to RNC.

**S4** — RNC reports new CM pattern, SIR (ms) and SIR (bts) to MS, HHO origin BTS and HHO destination BTS.

operations of MS | operations of BTS, RNC — (A)

**S5** — initialize STR(hho_ms)←SIR(ms)

**S6** — Switching between frequency f1 and frequency f2 in accordance with CM pattern, downlink TPC is carried out with SIR (hho_ms) as target SIR.

**S7** — receiving one frame of data? — N

Y

**S8** — Is synchronization of downlink established for data from HHO destination BTS? — N

Y

**S9** — Combining data using frequency f1 and f2, reception SIR (= SIR (dv_ms)) is calculated.

**S10** — Calculate diversity gain(=Gain(ms))
Gain(ms)=SIR(dv_ms)−SIR(ms)

**S11** — Update targetSIR(=SIR(hho_ms))
SIR(hho_ms)=SIR(ms)−Gain(ms)/2

**S12** — Is inter-frequency HHO completed ? — N

Y

End

26

FIG. 12

(A)

S13

Are HHO
origin BTS and HHO
destination BTS
the same
?

N ────→ (B)

Y

S14

initialize.
STR(hho_bts)←SIR(bts)

S15

Switching between frequency f1 and frequency
f2 in accordance with CM pattern, uplink TPC is
carried out with SIR (hho_bts) as target SIR.

S16

N ←── receiving one frame
of data?

Y

S17

N ←── Is synchronization
of uplink established for
data using frequency
f2?

Y

S18

Combining data using frequency f1 and f2,
reception SIR (= SIR (dv_bts)) is calculated.

S19

Calculate diversity gain(=Gain(bts))
Gain(bts)=SIR(dv_bts)−SIR(bts)

S20

Update targetSIR(=SIR(hho_bts))
SIR(hho_bts)=SIR(bts)−Gain(bts)/2

S21

N ←── Is inter-
requency HHO
completed
?

Y

( End )

FIG. 13

(B)

BTS      RNC    (C)

initialize
BTS1: SIR(hho_bts1)←SIR(bts)
BTS2: SIR(hho_bts2)←SIR(bts)
     S22

Switching between frequency f1 and frequency f2 in accordance with CM pattern, uplink TPC is carried out with SIR (hho_bts1) and SIR (hho_bts2) as target SIR.
     S23

transmits uplink data received to RNC 4 together with reception sensitivity information
     S24

(E)

(H)

update targetSIR
BTS1: SIR(hho_bts1)←SIR(bts)+Δ(bts1)
BTS2: SIR(hho_bts2)←SIR(bts)+Δ(bts2)
     S41

Is inter-requency HHO completed ?    S42

N

Y

End

**FIG. 14**

C
↓ RNC

initialize
n1[i]←0 for i=0~N−1
n2[i]←0 for i=0~N−1
Δ(bts1)←0
Δ(bts2)←0
cnt1←M1
cnt2←0
— S25

E ────────────→

selective combining processing
(select data having better
reception sensitivity from BTS) — S26

S27 — Is synchronization of uplink
established for data from BTS2? — N →

↓ Y

S28 — Have
data from BTS 1 been
selected?

S29 — Y
n1[N−1]←1
n2[N−1]←0

S30 — N
n1[N−1]←0
n2[N−1]←1

S31 — Calculate number of times data from each BTS
selected in the past N selection unit intervals
N1=Σn1[i] for i=0~N−1
N2=Σn2[i] for i=0~N−1

S32 — Calculate offset Δ for target SIR of each BTS
Δ(bts1)←SIR(bts)*f[N1−(N1+N2)/2]
Δ(bts2)←SIR(bts)*f[N2−(N1+N2)/2]

update n1[i], n2[i]
n1[i]←n1[i+1] for i=0~N−2
n2[i]←n2[i+1] for i=0~N−2
— S33

F
↓
G
↓

Report Δ(bts 1) and Δ(bts 2) to
BTS 1 and BTS 2, respectively — S40

H ← 

Is inter-
requency HHO
completed
? — N →

S43

↓ Y

End

FIG. 15

FIG. 16

targetSIR

SIR (hho_bts1)

SIR(bts)

SIR (hho_bts2)

Time

| M2 selection unit interval | M1 selection unit interval | M2 selection unit interval | M1 selection unit interval |
|---|---|---|---|
| non-reflective interval | reflective interval | non-reflective interval | reflective interval |

## INTERNATIONAL SEARCH REPORT

| International application No. |
|---|
| PCT/JP03/10743 |

| A. CLASSIFICATION OF SUBJECT MATTER |
|---|
| Int.Cl⁷ H04Q7/22 |

According to International Patent Classification (IPC) or to both national classification and IPC

| B. FIELDS SEARCHED |
|---|
| Minimum documentation searched (classification system followed by classification symbols) |
| Int.Cl⁷ H04B7/24-7/26, H04Q7/00-7/38 |

Documentation searched other than minimum documentation to the extent that such documents are included in the fields searched

| Jitsuyo Shinan Koho | 1922-1996 | Toroku Jitsuyo Shinan Koho | 1994-2003 |
| Kokai Jitsuyo Shinan Koho | 1971-2003 | Jitsuyo Shinan Toroku Koho | 1996-2003 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2000-509573 A (TELEFONAKTIEBOLAGET LM ERICSSON (publ)), 25 July, 2000 (25.07.00), Page 20, line 25 to page 22, line 16 & WO 97/40592 A1 & AU 9727183 A | 1,3,4,9,12, 14,15,20,23, 25,27,28,30, 32,45,46,49, 50 |
| Y | & EP 0895675 A1 & US 5896368 A & CN 1225764 A & BR 9708730 A | 8,10,19,21, 26,31,44,48 |
| A | & MX 9808737 A1 & KR 2000010593 A | 2,5-7,11,13, 16-18,22,24, 29,33-43,47 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 25 November, 2003 (25.11.03) | 09 December, 2003 (09.12.03) |

| Name and mailing address of the ISA/ | Authorized officer |
|---|---|
| Japanese Patent Office | |
| Facsimile No. | Telephone No. |

Form PCT/ISA/210 (second sheet) (July 1998)

<div align="center">

**INTERNATIONAL SEARCH REPORT**

</div>

| International application No. |
|---|
| PCT/JP03/10743 |

| C (Continuation). DOCUMENTS CONSIDERED TO BE RELEVANT | | |
|---|---|---|
| Category* | Citation of document, with indication, where appropriate, of the relevant passages | Relevant to claim No. |
| X<br><br><br><br>Y<br>A | WO 00/64070 A2 (TELEFONAKTIEBOLAGET LM ERICSSON (publ)),<br>26 October, 2000 (26.10.00),<br>Full text; all drawings<br>& AU 200045471 A       & BR 200009816 A<br>& EP 1171964 A2       & CN 1367956 A<br>& JP 2002-542711 A       & US 6512750 A | 1,3,4,8,9,<br>12,14,15,19,<br>20,23,25,27,<br>28,30,32,<br>44-46,48-50<br>10,21,26,31<br>2,5-7,11,13,<br>16-18,22,24,<br>29,33-43,47 |
| Y | JP 2002-33700 A (Alcatel),<br>31 January, 2002 (31.01.02),<br>Fig. 4; Par. Nos. [0109] to [0111]<br>& EP 1164717 A1       & CN 1329443 A<br>& FR 2810177 A1       & US 2002/0003785 A1<br>& KR 2001112620 A | 10,21,26,31 |

Form PCT/ISA/210 (continuation of second sheet) (July 1998)